# EUROPEAN PATENT APPLICATION

(11) **EP 2 608 009 A2**
(43) Date of publication of application: **26.06.2013**
(21) Application number: 12194930.9
(22) Date of filing: 29.11.2012
(51) Int. Cl.: G06F 3/0488

(54) **Mobile terminal and control method thereof**

(30) Priority: 21.12.2011 KR 20110139413
(71) Applicant: LG ELECTRONICS INC., Yeongdeungpo-Gu Seoul 150-721 (KR)
(72) Inventor: Park, Hanseok, Seoul (KR)
(74) Representative: Cabinet Plasseraud

(57) **Abstract**

A mobile terminal and control method for displaying screen data is provided. The mobile terminal and control method may include a display unit for displaying first screen data and a controller for controlling the display unit to display at least a first popup window containing information related to the first screen data or a second popup window containing information related to the second screen data when the first screen data is changed to second screen data in response to a touch input.

## Description

### BACKGROUND OF THE INVENTION

### 1. Field of the invention

The present disclosure relates to provide a mobile terminal and control method of the mobile terminal that is capable of providing user access to a previously-displayed region of a page when that previously-displayed region of the page is changed by the user.

### 2. Description of the related art

A terminal can be classified as a mobile terminal or a stationary terminal. A mobile terminal can be classified as a handheld terminal or a vehicle-mounted terminal based on whether the mobile terminal can be carried by a user.

Mobile terminals can function as an integrated multimedia player. For example, the mobile terminal may feature the ability to capture still images or moving images, play music or video files, execute games and receive broadcast. The functions of the mobile terminal may be supported and enhanced by improvements to structural or software elements of the mobile terminal.

Because the display unit of the mobile terminal may be limited in size, an entire region of a page may not be displayed on the display unit. As a result, when a user scrolls a displayed page from a first region to a second region, the user may have difficulty viewing the previously displayed first region.

### SUMMARY OF THE INVENTION

An objective of the present disclosure is to provide a mobile terminal and control method of the mobile terminal that is capable of providing user access to a previously-displayed region of a page when that previously-displayed region of the page is changed by the user.

In some embodiments of the present invention, a mobile terminal may include a display unit configured to display first screen data and a controller configured to control the display unit to display a first popup window containing information related to the first screen data or a second popup window containing information related to second screen data when the first screen data is changed to the second screen data in response to a touch input.

In some embodiments of the present invention, the first and second screen data may be contained in the same page. In some other embodiments of the present invention, the first and second screen data may be contained in different pages from each other. In some embodiments of the present invention, the first screen data may be changed to the second screen data in response to a scrolling or flick input.

In some embodiments of the present invention, the first popup window may be linked to the first screen data, and the second popup window may be linked to the second screen data.

In some embodiments of the present invention, the controller controls the display unit to display information suitable to a predetermined condition on at least the first or second popup window.

In some embodiments of the present invention, the controller controls the display unit to display information corresponding to at least text contained in at least the first or second screen data, a portion of an image contained in the at least first or second screen data, a region selected from the at least first or second screen data by the user or a captured image displayed on the at least first or second popup window.

In some embodiments of the present invention, the controller controls the display unit to display the at least first or second popup window in a region that is different from a region in which the at least first or second screen data is displayed or overlap the display of the at least first or second popup window with the region in which the at least first or second screen data is displayed.

In some embodiments of the present invention, when the at least first or second popup window is overlapped with the region in which the at least first or second screen data is displayed, the controller controls the display unit to display the overlapped at least first or second popup window in a transparent or semi-transparent manner such that at least first or second screen data corresponding to an overlapped region is displayed, or display the at least first or second popup window in a non-transparent manner such that at least first or second screen data corresponding to the overlapped region is not displayed.

In some embodiments of the present invention, the controller controls the display unit to display screen data linked to the at least first or second popup window when the displayed at least first or second popup window is selected.

In some embodiments of the present invention, when two or more popup windows are selected, the controller controls the display unit to display screen data linked to the selected two or more popup windows in a plurality of screen regions.

In some embodiments of the present invention, the controller controls graphic information of the at least first or second popup window based on attribute information of the screen data linked to the displayed at least first or second popup window.

In some embodiments of the present invention, the graphic information of the at least first or second popup window may include a 3-dimensional depth value of the at least first or second popup window.

In some embodiments of the present invention, when a popup window having a 3-dimensional depth value displayed on the display unit is selected, the screen data linked to the selected popup window may be displayed as having the same 3-dimensional depth value as the selected popup window.

In some embodiments of the present invention, whether to display the at least first or second popup window may be determined based on a scrolling speed, a flick input speed or a time at which the at least first or second screen data would be displayed.

In some embodiments of the present invention, when a displayed page is switched to another page, the controller controls the display unit to no longer display the at least first or second popup window or the at least first or second screen data.

In some embodiments of the present invention, a switched page may include a list of no longer displayed popup windows.

In some embodiments of the present invention, when a number of displayed popup windows is greater than a predetermined number, the controller controls the display unit to no longer display the at least first or second popup windows based on user selection or the attribute information of the at least first or second popup window.

In some embodiments of the present invention, the first screen data is contained in the first page, the second screen data is contained in the second page, the first and second pages are different from each other, and the first and second pages are linked to each other by a hyperlink.

In some embodiments of the present invention, the displayed at least first or second screen data includes information in a predetermined partial region of the display unit. In some embodiments of the present invention, the displayed predetermined partial region includes at least a page containing an image or text, a web page, an e-mail, an e-document or a content of social network services (SNS). In some embodiments of the present invention, the first popup window may be displayed with the first screen data.

Some embodiments of the present invention are directed to a method of controlling a mobile terminal, wherein the method may include displaying first screen data on a display unit, changing the displayed first screen data to second screen data based on a touch input, and displaying at least the first popup window containing information related to the first screen data or the second popup window containing information related to the second screen data.

In some embodiments of the present invention, the first and second screen data are contained in one page. In other embodiments of the present invention, the first and second screen data are contained in different pages. In some embodiments of the present invention, the first screen data is changed to the second screen data based on a scrolling or flick input.

In some embodiments of the present invention, the first popup window is linked to the first screen data, and the second popup window is linked to the second screen data. In some embodiments of the present invention, the method may further include displaying screen data linked to the selected at least first or second popup window on the display unit when at least the first or second popup window is selected.

### BRIEF DESCRIPTION OF THE DRAWINGS

The accompanying drawings, which are included to provide a further understanding of the invention and are incorporated in and constitute a part of this specification, illustrate embodiments of the invention and, together with the description, serve to explain the principles of the invention.
FIG. 1 is a block diagram illustrating an embodiment of the mobile terminal according to the present invention;
FIGS. 2A and 2B are perspective views illustrating the external appearance of an embodiment of the mobile terminal according to the present invention;
FIG. 3 is a flow chart illustrating a method of controlling the mobile terminal according to an embodiment of the present invention; and
FIGS. 4 through 17 are conceptual views illustrating operations performed by the mobile terminal according to embodiments of the present invention.

### DETAILED DESCRIPTION OF THE INVENTION

Preferred embodiments of the present invention will be described with reference to their accompanying drawing(s) to the extent that the present invention can be easily embodied by a person having ordinary skill in the related art. However, the present invention may be implemented in various different forms, and, therefore, the present invention is not limited by the embodiments illustrated herein. In order to clearly describe the present invention, parts not related to the description are omitted, and like reference numerals designate like constituent elements throughout the specification.

A mobile terminal disclosed herein may include a portable phone, a smart phone, a laptop computer, a digital broadcast mobile device, a personal digital assistant (PDA), a portable multimedia player (PMP), a navigation device, and similar devices. However, it is easily understood by one skilled in the relevant art that a configuration according to the following description may be applicable to a stationary terminal such as a digital television (TV), a desktop computer and similar devices.

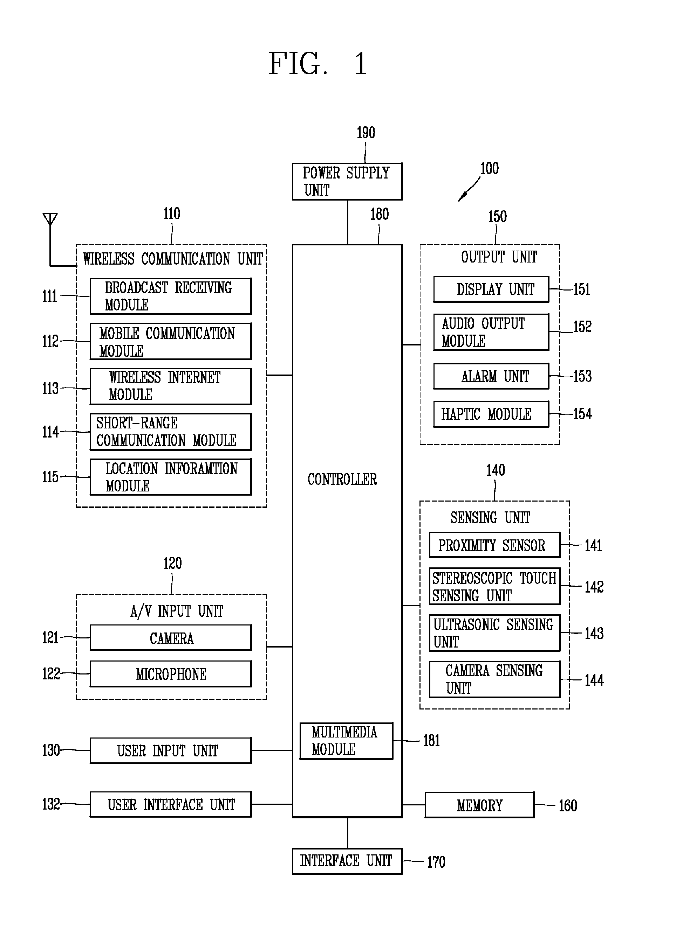

FIG. 1 is a block diagram illustrating a mobile terminal 100 according to one embodiment of the present invention. Referring to FIG. 1, the mobile terminal may include a wireless communication unit 110, an audio/video (A/V) input unit 120, a user input unit 130, a sensing unit 140, an output unit 150, a memory 160, an interface unit 170, a controller 180, a power supply unit 190 and other similar elements. However, the constituent elements illustrated in FIG. 1 are not necessarily required, and the mobile communication terminal may be implemented with greater or fewer numbers of elements than those illustrated in FIG. 1.

The wireless communication unit 110 may include one or more elements allowing radio communication between the mobile terminal 100 and a wireless communication system (not shown). The wireless communication unit may allow radio communication between the mobile terminal and a network (not shown) in which the mobile terminal is located. For example, the wireless communication unit may include a broadcast receiving module 111, a mobile communication module 112, a wireless Internet module 113, a short-range communication module 114, a location information module 115, and similar elements.

The broadcast receiving module 111 receives broadcast signals and/or broadcast associated information from an external broadcast management server (not shown) via a broadcast channel. The broadcast associated information may be information regarding a broadcast channel, a broadcast program, a broadcast service provider, and similar information. The broadcast associated information may also be provided via the mobile communication module 112 or a mobile communication network (not shown). The broadcast signal information and broadcast associated information received via the broadcast receiving module may be stored in the memory 160.

The mobile communication module 112 transmits and/or receives a radio signal to and/or from at least a base station (not shown), an external terminal (not shown) or a server (not shown) via a mobile communication network. The radio signal may include a voice call signal, a video call signal or various types of data related to text and/or multimedia message transmission and/or reception.

The wireless Internet module 113 is a module for supporting wireless Internet access and may be built-in or externally installed onto the mobile terminal 100. A variety of wireless Internet access techniques may be used, such as Wireless LAN (WLAN), Wi-Fi, Wireless Broadband (Wibro), World Interoperability for Microwave Access (Wimax), High Speed Downlink Packet Access (HSDPA) and other wireless Internet access techniques.

The short-range communication module 114 is a module for supporting short-range communication. A variety of short-range communication technologies may be used, such as Bluetooth™, Radio Frequency Identification (RFID), Infrared Data Association (IrDA), Ultra WideBand (UWB), ZigBee™ and other short-range communication technologies.

The location information module 115 is a module for acquiring a location of the mobile terminal 100. In some embodiments, the location information module may be a Global Positioning System (GPS) module.

With respect to FIG. 1, the A/V input unit 120 receives audio and/or video signals and may include a camera 121, a microphone 122 and similar elements. The camera processes still or moving image frames obtained by an image sensor (not shown) in a video phone call or image capturing mode. The processed image frame may be displayed on a display unit 151. The image frames processed by the camera may be stored in the memory 160 or transmitted to an external device (not shown) via the wireless communication unit 110. Two or more cameras may be provided.

The microphone 122 receives an external audio signal when the mobile terminal 100 is in a phone call mode, a recording mode, a voice recognition mode, and similar modes. The microphone processes the audio signal into electrical voice data. The processed voice data may be converted and output into a format that is transmittable to a mobile communication base station (not shown) via the mobile communication module 112. The microphone may implement various types of noise canceling algorithms to cancel noise generated while receiving the external audio signal.

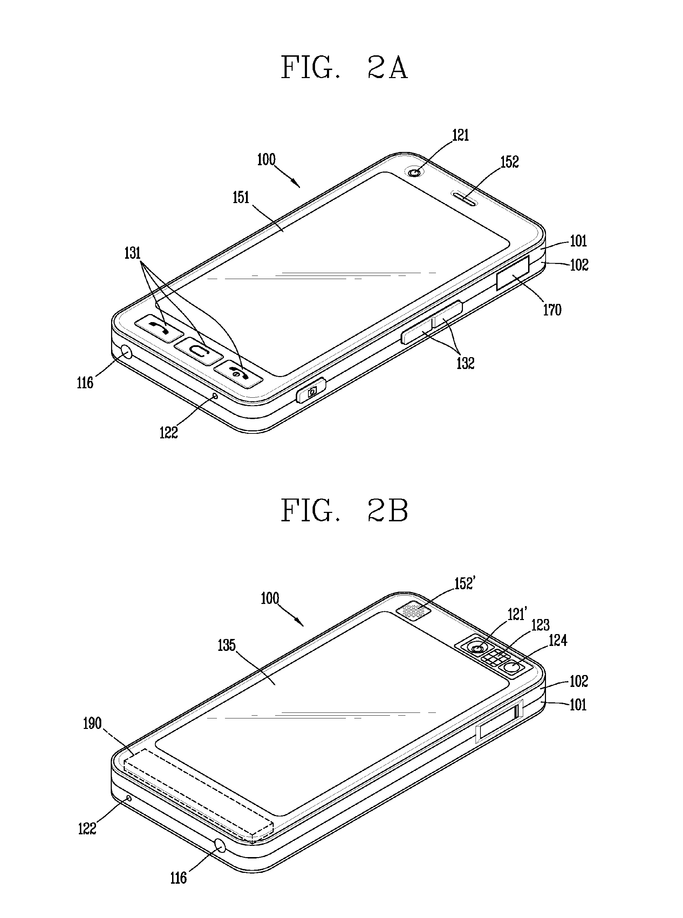

The user input unit 130 may generate input data for controlling an operation of the mobile terminal 100. The user input unit may be configured with a keypad (not shown), a dome switch (not shown), a touch pad 135 (see FIG. 2B), a jog wheel (not shown), a jog switch (not shown), and similar elements.

The sensing unit 140 can detect a presence or an absence of a user's contact, an open or closed configuration of the mobile terminal 100, a location of the mobile terminal, an orientation of the mobile terminal, an acceleration or deceleration of the mobile terminal, and similar attributes of the mobile terminal. The sensing unit can also generate a sensing signal for controlling operations of the mobile terminal.

For example, when the mobile terminal is a slide-type phone, the sensing unit may sense an opened or closed configuration of the slide-type phone. The sensing unit may also sense whether power is being supplied from the power supply unit 190. The sensing unit may also sense whether an external device (not shown) is coupled to the interface unit 170.

The sensing unit 140 may include a proximity sensor 141, a stereoscopic touch sensing unit 142, an ultrasonic sensing unit 143, and a camera sensing unit 144. The sensing unit may be configured with a 3-dimensional sensor for detecting the location of an object (hereinafter, referred to as "sensing object") existing and moving in a 3-dimensional space. The sensing object may be, for example, part of the user's body, an accessory device and similar items.

The sensing unit 140 may include a touch sensor (not shown) for sensing a touch operation with respect to the display unit 151. The touch sensor may be implemented as a touch film (not shown), a touch sheet (not shown), a touch pad 135 (see FIG. 2B), and similar elements. The touch sensor may be configured to convert changes in pressure applied to a specific part of the display unit 151 or capacitance generated from a specific part of the display unit into electric input signals. The touch sensor may be configured to sense a touch position, a touch area or a touch pressure.

When the touch sensor and display unit 151 form an interlayer structure, the display unit may be used as an input device rather than an output device. The display unit may be referred to herein as a "touch screen."

When a touch input is detected at the touch screen 151, the corresponding signals may be transmitted to a touch controller (not shown). The touch controller processes signals transferred from the touch sensor and transmits data corresponding to the processed signals to the controller 180. Accordingly, the controller 180 can sense which region of the display unit 151 has been touched.

When the touch screen 151 is a capacitance-type touch screen, the proximity of an object can be detected via changes to an electromagnetic field caused by the proximity of the object.

The touch screen 151 may comprise a proximity sensor 141. The proximity sensor detects the presence or absence of a sensing object using an electromagnetic field or infrared rays that do not require a mechanical contact between the touch screen and the source of the touch input. The proximity sensor has a longer lifespan and more enhanced utility than a contact sensor. The proximity sensor may include an optical transmission-type photoelectric sensor, a direct reflective-type photoelectric sensor, a mirror reflective-type photoelectric sensor, a high-frequency oscillation proximity sensor, a capacitance-type proximity sensor, a magnetic-type proximity sensor, an infrared rays proximity sensor, and similar sensors.

The proximity sensor 141 may be displayed in an interior area of the mobile terminal 100 or adjacent to the touch screen 151. The proximity sensor measures a distance between a sensing object (for example, the user's finger or stylus pen) a detecting surface. The proximity sensor may recognize a portion of a stereoscopic image that is touched using the measured distance. The proximity sensor 141 may be configured to sense a touch on a 3-dimensional space using the proximity level of the sensing object.

The output unit 150 may generate an output related to visual, auditory and/or tactile senses. The output unit may include a display unit 151, an audio output module 152, an alarm unit 153, a haptic module 154 and similar elements.

The display unit 151 may display information processed by the mobile terminal 100. For example, when the mobile terminal operates in a phone call mode, the display unit may display a user interface (UI) or a graphic user interface (GUI) related to a phone call. When the mobile terminal operates in a video call mode or an image capturing mode, the display unit may display a captured image, a received image, an UI, a GUI, or similar display item. The display unit 151 may include at least a liquid crystal display (LCD), a thin film transistor-liquid crystal display (TFT-LCD), an organic light emitting diode display (OLED), a flexible display, a 3-dimensional display or an e-ink display.

At least one of the displays or display devices included in the display unit 151 may be a transparent- or optical-transparent-type to allow the user to view the outside through that display or display device. Such a display may be referred to as a transparent display. A representative example of the transparent display may be a transparent OLED (TOLED) or a similar display. Under such a configuration, the user can view an object positioned at a rear side of the mobile terminal 100 body through a region occupied by the display unit 151 of the mobile terminal body.

Two or more display units 151 may be provided. For example, a plurality of the display units may be on a single surface or different surfaces and be separated or integrated with each other.

The display unit 151 may be configured with a stereoscopic display unit (not shown) for displaying a stereoscopic image. A stereoscopic image includes a 3-dimensional stereoscopic image that allows the user to perceive a depth of an object located on a monitor or screen.

The 3-dimensional stereoscopic image may be created via binocular disparity. Binocular disparity denotes a disparity between the location of two eyes that are separated by approximately 65 mm. The disparity allows the user to perceive depth and a sense of reality of a stereoscopic image. The two eyes perceive two different two-dimensional images and those images are transferred via the retina and merged together as a single image in the brain.

In the present disclosure, the term "depth value" denotes an index referring to a distance difference between popup windows contained in a 3-dimensional image. When a popup window displayed by the display unit 151 is perceived in a 2-dimensional shape by the user, the depth value of the popup window may be zero. However, the depth value of a popup window that is perceived as a protruded shape toward an external portion of the mobile terminal 100 may be a negative value. The depth value of a popup window that is perceived as a concave shape toward an internal portion of the mobile terminal 100 may be a positive value.

An absolute value of the depth value increases as the location of the popup window contained in the 3-dimensional image is perceived at a nearer distance. The depth value increases as the location at which a popup window contained in the 3-dimensional image of an internally concave shape is perceived at a farther distance.

A stereoscopic method (i.e., a glasses method), an auto-stereoscopic method (i.e., a no-glasses method), a projection method (i.e., a holographic method), and similar methods may be utilized by the stereoscopic display unit (not shown). The stereoscopic method is primarily used in a home television receiver, and similar devices, and may include a Wheatstone stereoscopic method, or similar methods.

Examples of the auto-stereoscopic method include a parallax barrier method, a lenticular method, an integral imaging method, and similar methods. The projection method may include a reflective holographic method, a transmissive holographic method, and similar methods.

A 3-dimensional stereoscopic image may include a left image (i.e., an image from the left eye) and a right image (i.e., an image from the right eye). The method of implementing a 3-dimensional stereoscopic image can be divided into a top-down method, in which a left image and a right image are located at the top and bottom of a frame, a left-to-right or side by side method, in which a left image and a right image are located at the left and right sides of a frame, a checker board method, in which pieces of a left and right images are located in a tile format, an interlaced method, in which left and right images are alternately located in columns and rows, and a time-sequential or frame-by-frame method, in which left and right images are alternately displayed for each time frame according to the method of combining a left image and a right image into a 3-dimensional stereoscopic image.

For 3-dimensional thumbnail images, a left image thumbnail and a right image thumbnail may be generated from the left and right images of the original image frame, and, subsequently, combined with each other to generate a 3-dimensional stereoscopic image. Typically, a thumbnail is a reduced image or reduced still video. The left and right thumbnail image generated in this manner are displayed with left and right distance difference information on the screen to generate a perception of a stereoscopic space. When the stereoscopic display unit and the touch sensor are configured with an interlayer structure or the stereoscopic display unit and the 3-dimensional sensor are combined with each other, the stereoscopic display unit may be used as a 3-dimensional input device.

The audio output module 152 may output audio data received from the wireless communication unit 110 or stored in the memory 160 during a call-receiving mode, a call-placing mode, a recording mode, a voice selection mode, a broadcast reception mode, and similar modes. The audio output module may output an audio signal related to a function performed by the mobile terminal 100 (e.g., sounding an alarm when a call or message is received). The audio output module may include a receiver, a speaker, a buzzer, and similar elements.

The alarm unit 153 outputs signals notifying the user about an occurrence of an event. Examples of such an event include a call being received, a message being received, a key signal being input, a touch being input, and similar events. The alarm unit may output video signals, audio signals, and other types of signals, such as vibration signals. Since the video or audio signals may also be output through the display unit 151 or the audio output module 152, the display unit and the audio output module may be categorized as part of the alarm unit.

The haptic module 154 generates various tactile effects that can be felt by the user. A representative example of the tactile effects generated by the haptic module may include vibration. Vibration generated by the haptic module may have a controllable intensity, a controllable pattern, and similar attributes. Different vibrations may be output in a synthesized manner or in a sequential manner. The haptic module 154 may generate various tactile effects, including an arrangement of pins vertically moved with respect to a skin surface, air injection force or air suction force through an injection port or suction port, touch by a skin surface, contact with an electrode, effects by stimulus such as an electrostatic force, reproduction of cold and/or hot feeling(s) using a heat absorbing or emitting device, and similar tactile effects.

The haptic module 154 may be configured to transmit tactile effects through direct contact with the user. Two or more haptic modules may be provided.

The memory 160 may store a program for operating the controller 180 or temporarily store input/output data (e.g., phonebooks, messages, still images, moving images, and similar data). The memory may store data related to various vibration patterns and sound outputs when performing a touch input on the touch screen 151.

The memory 160 may be implemented using any type of suitable storage medium, including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-Only Memory (EEPROM), Programmable Read-Only Memory (PROM), magnetic memory, magnetic disk, optical disk, and similar types of suitable storage medium. Also, the controller 180 may store the memory via the Internet.

The interface unit 170 may generally be implemented to interface the mobile 100 terminal with external devices (not shown). The interface unit may allow data reception from an external device, power delivery to each component in the mobile terminal and/or data transmission from the mobile terminal to an external device. The interface unit may include, for example, wired/wireless headset ports, external charger ports, wired/wireless data ports, memory card ports, ports for coupling devices having an identification module, audio Input/Output (I/O) ports, video I/O ports, earphone ports, and similar interfaces.

The identification module (not shown) may be configured as a chip for storing information required to authenticate an authority to use the mobile terminal 100, which may include a User Identity Module (UIM), a Subscriber Identity Module (SIM), and similar module. Also, the mobile terminal 100 having the identification module may implement or use a type of smart card. The identification module can be coupled to the mobile terminal via a port.

The interface unit 170 may serve as a path for power to be supplied from an external cradle (not shown) to the mobile terminal 100 when the mobile terminal is connected to the external cradle. The interface unit may also serve as a path for transferring various command signals input from the cradle by a user. Such command signals or power inputs from the cradle may operate as signals for recognizing that the mobile terminal has accurately been mounted to the cradle.

The controller 180 controls the operations of the mobile terminal 100. For example, the controller performs the control and processing related to telephony calls, data communications, video calls, and similar events. The controller may include a multimedia module 181 that provides multimedia playback. The multimedia module may be configured as part of the controller or as a separate component. The controller can perform pattern recognition processing to recognize a handwriting input or a drawing input as text or an image.

The power supply unit 190 may receive external or internal power to provide power required by various components under the control of the controller 180.

Various embodiments described herein may be implemented in a computer or similar device readable medium using software, hardware, or any combination of software and hardware.

For hardware implementation, embodiments of the present invention may implement at least application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and other electrical units designed to perform the functions described herein. In some cases, such embodiments may be implemented by the controller 180 itself.

For software implementation, embodiments of the present invention may implement procedures or functions together with separate software modules that perform at least one function or operation. Software codes can be implemented by a software application written in any suitable programming language. The software codes may be stored in the memory 160 and executed by the controller 180.

The user input unit 130 is manipulated to receive a command for controlling the operation of the mobile terminal 100, and the user input unit may include a plurality of manipulation units 131 and 132 (see FIG. 2A). The manipulation units may be commonly designated as a manipulating portion, and any method may be utilized when a tactile manner is used by the user to perform manipulation of the manipulation portion.

Various types of visual information may be displayed on the display unit 151. The visual information may be displayed in the form of a character, a numeral, a symbol, a graphic, an icon, and similar visual information. An input of the visual information may include at least a character, a numeral, a symbol, a graphic, or an icon that are displayed with a predetermined arrangement as a keypad. Such a keypad may be referred to as a "soft key."

The display unit 151 may operate on an entire region or operate by dividing into a plurality of regions. When the display unit is divided into a plurality of regions, the plurality of regions may be configured to operate in an associative way.

For example, an output window and an input window may be displayed on the upper and lower portions of the display unit, respectively. The output window and the input window may be regions allocated to output or input information, respectively. A soft key corresponding to numerals for inputting a phone number, or similar information, is output on the input window.

When the soft key is touched, a numeral corresponding to the touched soft key is displayed on the output window. When a first manipulating unit 131 is manipulated, a phone call connection to the phone number displayed on the output window is attempted or a text displayed on the output window is entered.

The display unit 151 or touch pad 135 (see FIG. 2B) may be configured to sense a touch scroll. The user may move a displayed object, such as a cursor or a pointer placed on an icon or similar item, by scrolling the display unit or touch pad. When a finger is moved on the display unit or touch pad, a path being moved by the finger may be visually displayed on the display unit. This method may be used to edit an image displayed on the display unit.

When the display unit 151 and touch pad 135 (see FIG. 2B) are touched together within a predetermined period of time, a particular function of the terminal 100 may be implemented. For example, when the user holds a body of the mobile terminal 100 using his/her thumb and forefinger, the controller may control an activation or de-activation of the display unit or touch pad.

FIGS. 2A and 2B are perspective views illustrating an embodiment of an external appearance of the mobile terminal 100. FIG. 2A illustrates a front view and a side view of an embodiment of the mobile terminal 100. FIG. 2B illustrates a rear view and an alternate side view of the embodiment of the mobile terminal.

Referring to FIG. 2A, the mobile terminal 100 is provided with a bar-type terminal body. However, the present invention is not limited to this type of terminal. The present invention is also applicable to various other structures of terminals, such as a slide-type terminal, a folder-type terminal, a swivel-type terminal, a swing-type terminal, and similar types of terminals that comprise two and more moveable bodies combined together.

The terminal body includes a case (i.e., a casing, a housing, a cover, etc.) forming an outer layer of the mobile terminal 100. The case may be divided into a front case 101 and a rear case 102. Various electronic components may be integrated in a space formed between the front case and the rear case. At least one middle case (not shown) may be located between the front case 101 and the rear case 102. The front and rear cases may be formed by injection-molding a synthetic resin or may be formed from a metal material, such as stainless steel (STS), titanium (Ti) or similar metal.

A display unit 151, an audio output module 152, a camera 121, a user input unit 130 (see FIG. 1), a microphone 122, an interface unit 170, and other elements may be arranged on the terminal body.

The display unit 151 occupies a substantial portion of the front case 101. The audio output module 152 and the camera 121 may be located adjacent to an end region of the display unit. The user input unit 130 and the microphone 122 may be located on a region adjacent to a different end of the display unit. The user interface unit 132 and the interface unit 170, and similar elements, may be located on a lateral surface of the front case 101 and/or rear case 102.

The user input unit 130 is manipulated to receive a command for controlling the operation of the portable terminal 100. The user input unit may include a plurality of manipulation units 131, 132.

The plurality of manipulation units 131, 132 receive various commands. For example, a first manipulation unit may be used to receive a command, such as start a call, end a call, scroll a page, or similar functions. A second manipulation unit may be used to receive a command, such as controlling a volume level being output from the audio output module 152 or switching the mobile terminal 100 into a touch recognition mode.

Referring to FIG. 2B, a camera 121' may be mounted on the rear case 102. The rear camera captures images in a direction that is substantially opposite to the direction in which the camera 121 (see FIG. 2A) mounted on the front case 101 captures images. The camera on the rear case may capture images having different numbers of pixels from the number of pixels captured by the front camera.

For example, the camera 121 mounted on the front case may be configured to capture fewer numbers of pixels relative to the number of pixels captured by the camera mounted on the rear case. The camera mounted on the front case may be used for video communication. A user may capture his or her own face using the camera mounted on the front case and send it to another party in real time during the video communication. The camera mounted on the rear case may be used for capturing and storing high quality images.

The cameras 121 and 121' may be provided in a rotatable and popupable manner in the terminal body. Furthermore, a flash 123 and a mirror 124 may be located adjacent to the rear camera. The flash illuminates light toward an object when photographing the object via the camera mounted on the rear case 102. The mirror allows the user to look at his or her own face, or another object, in a reflection when capturing an image using the camera mounted on the rear case.

An audio output module 152' may be located on a rear surface of the terminal body. The audio output module on the front case 101 and the audio output module 152 can implement a stereo audio function or a stereo speaker phone mode during a phone call.

An antenna 116 for receiving broadcast signals may be located on a lateral surface of the terminal body. The antenna constitutes part of a broadcast receiving module 111 (see FIG. 1) and may be pulled out from the terminal body.

A power supply unit 190 for supplying power to the mobile terminal 100 may be mounted on the terminal body. The power supply unit may be incorporated in the terminal body or directly detachable from the outside of the terminal body.

A touch pad 135 for detecting a touch may be mounted on the rear case 102. The touch pad may be also configured with optical transmission capabilities, similar to the display unit 151 (see FIG. 2A). Alternatively, a rear display unit (not shown) for displaying visual information may be mounted on the touch pad. Information displayed on the front display units on the front and rear cases may be controlled by the touch pad.

The touch pad 135 may be operated in conjunction with the display unit 151 mounted on the front case 101. The touch pad may be located in parallel and at a rear side of the display unit. The touch pad may have a size that is equal to or smaller than the display unit.

Due to the limited size of the display unit 151, it is possible that an entire region of a page may not be displayed on a screen of the display unit. As a result, when a region of a page displayed on the display unit is changed from a first region to a second region via scrolling, the user may have difficulty viewing the scrolled first region.

However, in some embodiments of the present invention, the mobile terminal 100 and control method of the mobile terminal are capable of displaying the scrolled first region of the page when the scrolled first region is changed to the second region.

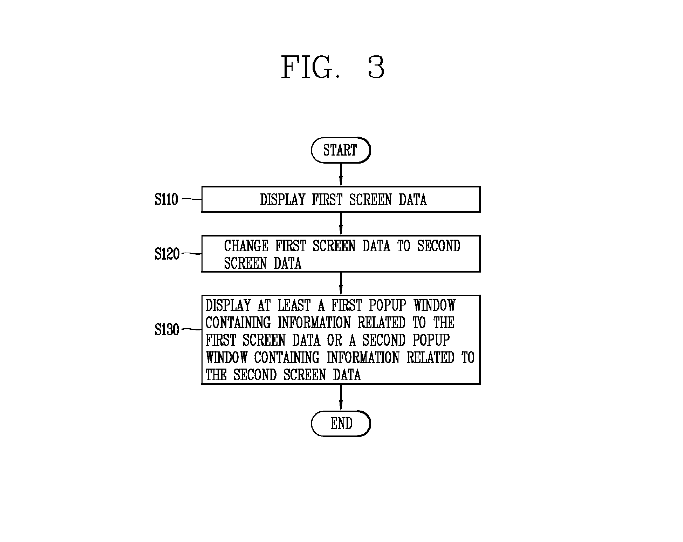

FIG. 3 is a flow chart illustrating a method of controlling the mobile terminal 100 according to an embodiment of the present disclosure. In FIG. 3, the process (S110) of displaying first screen data on the display unit 151 is shown. At least a page containing an image or text, a web page, an e-mail, an e-document, a content of social network services (SNS), phone call history information or outbound and inbound text message history information may be displayed on the display unit 151. "Screen data," as used herein, refers to information displayed in at least a predetermined partial region on the display unit.

Next, the first screen data is changed to second screen data (S120). The first and second screen data may be contained in one page. In some embodiments, the first screen data may be changed to the second screen data based on a touch input. The first screen data may be changed to the second screen data by a scrolling or flick input. In some embodiments, at least a part of the first and second screen data may be overlapped with each other on the display unit 151.

As used herein, "scrolling" refers to moving all information in a vertical or horizontal direction when the amount of information contained in a page exceeds the display capability of one screen. For example, a touch input may be a flick gesture. When a touch input is detected, the mobile terminal 100 can scroll the displayed page. The touch gesture contains start and end coordinates. The flick gesture refers to a touch gesture being dragged in a direction and subsequently released.

Furthermore, when a predetermined input to the user input unit 130 is sensed, auto-scrolling to the page may be performed. "Auto-scrolling" refers to moving all information in a vertical or horizontal direction at a predetermined speed.

When a multi-touch input to the page is sensed (e.g., when a pinch-in or pinch-out input is sensed), the first screen data may be changed to the second screen data as information contained in the first screen data is enlarged or reduced. At least a part of the first or second screen data may be overlapped with each other on the display unit 151.

Alternatively, the first and the second screen data may be contained in different pages. In such a case, the first screen data may be changed to the second screen data based on a touch input.

The first and second pages may be linked to each other by a hyperlink. For example, a touch input to the first page may comprise a touch input to an object contained on the first page that is linked to the second page. When a touch input to the first page is sensed, the first screen data contained in the first page may be changed to the second screen data contained in the second page.

Next, at least a first popup window containing information related to the first screen data or a second popup window containing information related to the second screen data is displayed (S130) on the display unit 151. The first popup window may be linked to the first screen data and the second popup window may be linked to the second screen data. When the first or second popup window is selected, the selected popup window and screen data linked to the selected popup window may be displayed on the display unit 151.

According to some embodiments of the present invention, when the first screen data is changed to the second screen data, the first popup window containing information related to the first screen data may be displayed together with the second screen data. When the second screen data is changed to third screen data, the second popup window containing information related to the second screen data may be displayed together with the first popup window and the third screen data.

According to some embodiments of the present invention, when the first screen data is changed to the second screen data, the second popup window may be displayed together with the first popup window and the second screen data. When the second screen data is changed to third screen data, a third popup window may be displayed together with the first popup window, the second popup window, and the third screen data.

When screen data is changed, the controller 180 may control the display unit 151 to display a popup window containing information related to the screen data only when a specific condition is satisfied. The specific condition may include at least a scrolling speed of the displayed page, a flick input speed to the page, or a time at which the screen data is to be displayed on the display unit 151. When screen data is changed, the controller 180 may display a message window for selecting whether to display a popup window.

A detection unit (not shown) may detect a scrolling speed or flick input speed. The controller 180 compares the detected scrolling speed or flick input speed with a predetermined speed to determine whether to display the popup window.

Though not illustrated in the drawings, when a popup window displayed on the display unit 151 is subsequently selected, the selected popup window and screen data linked to the popup window may be displayed on the display unit 151. When the first popup window is selected while the first popup window, the second popup window and the second screen data are displayed on the display unit, the first screen data may be displayed on the display unit. In this case, the second screen data may be switched to the first screen data and the first and the second screen data may be displayed in a plurality of screen regions.

The graphic information of the first popup window may comprise at least a color, a shape, a size, or a 3-dimensional depth value. The graphic information of the first screen data may be changed in response to selection of the first popup window. Accordingly, the user can intuitively recognize a popup window related to the currently displayed screen data. Furthermore, when the first popup window is selected, the controller 180 may control the display unit 151 to no longer display the first popup window while displaying the first screen data.

When screen data displayed on the display unit 151 is changed, a popup window related to changed screen data may be displayed. Accordingly, the user can display screen data of interest by selecting the corresponding popup window. Compared to displaying screen data of interest through scrolling, the aforementioned method provides an alternative that better utilizes the computational processing, memory, and power of the mobile terminal 100.

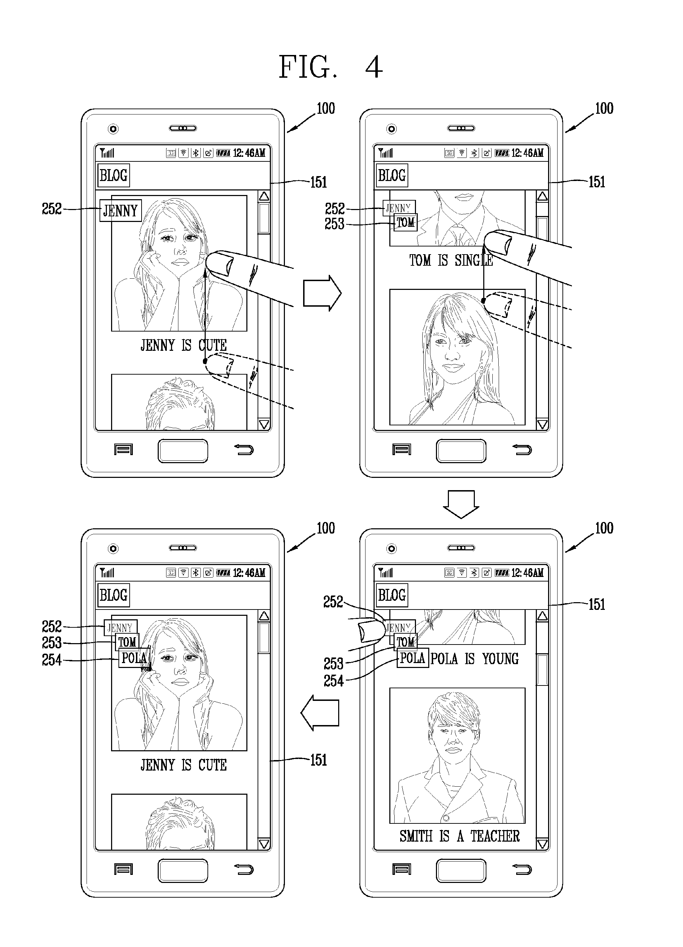

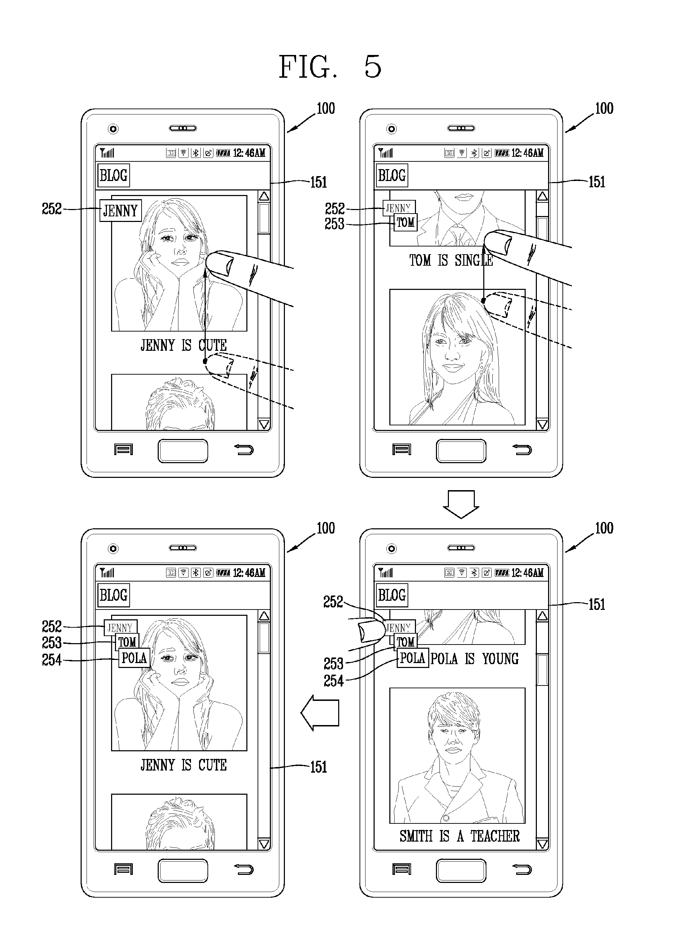

FIGS. 4 and 5 are conceptual views illustrating operations performed by the mobile terminal 100 according to some embodiments of the present invention. The display unit 151 may display first screen data containing a web page together with a first popup window 252 containing information related to the first screen data. In FIGS. 4 and 5, information (e.g., "JENNY") corresponds to a first word of text contained in the first screen data and may be displayed on the first popup window.

The controller 180 may control the display unit 151 to display information related the first screen data on the first popup window 252. Information related to a predetermined condition may also be displayed on the first popup window.

For example, information corresponding to at least a specific word of text contained in the first screen data, a specific portion of an image contained in the first screen data, a region selected from the first screen data by the user, or a capture image of the first screen data may be displayed on the first popup window 252. Furthermore, information related to an augmented reality (AR) that corresponds to information displayed on the first popup window may be tagged to the first popup window. Furthermore, though not shown in the drawings, when screen data containing phone call history information and a popup window linked to that screen data are displayed together, contact information occupying the highest portion of the phone call history among contact information contained in the screen data may be displayed on the first popup window.

The first popup window 252 may be displayed as overlapped with a region in which the first screen data is displayed. As illustrated in FIG. 4, the first popup window may be displayed in a transparent or semi-transparent manner such that the first screen data corresponding to the overlapped region is viewable. Alternatively, the first popup window may be displayed in a non-transparent manner such that the first screen data corresponding to the overlapped region is hidden. The user may select a method of displaying the popup window.

When a flick gesture in a first direction (e.g., from bottom to top) is sensed and the page is scrolled, the first screen data may be changed to the second screen data. Furthermore, the controller 180 may control the display unit 151 to display a second popup window 253 containing information related to the second screen data together with the first popup window 252 and second screen data. As illustrated in FIG. 4, information (e.g., "TOM") corresponding to a first word of the text contained in the second screen data may be displayed on the second popup window.

When a flick gesture in the first direction is again sensed and the page is scrolled, the second screen data may be changed to third screen data. As illustrated in the drawings, at least a part of the second and third screen data may be overlapped with each other.

The controller 180 may control the display unit 151 to display a third popup window 254, on which information (e.g., "POLA") corresponding to a first word of the text contained in the third screen data is displayed. Meanwhile, the first popup window 252, the second popup window 253, and the third screen data are also displayed on the display unit.

The first through third popup windows 252-254 may be displayed on the display unit 151 in different sizes from one another. Specifically, the controller 180 may control the graphic information of each of the first through third popup windows based on a point in time when the first through third screen data are displayed. The graphic information may include at least a color, a shape, a size, or a 3-dimensional depth value. Furthermore, the controller 180 may control the location at which the first through third popup windows are displayed on the display unit. Accordingly, the user can intuitively recognize a point in time at which each of the first through third popup windows were generated.

Though not shown in the drawings, the controller 180 may control the graphic information of each of the first through third popup windows 252-254 based on attribute information of the first through third screen data. The attribute information may include at least a point in time at which the first through third screen data are displayed on the display unit 151, a time period for which the first through third screen data are displayed on the display unit, or priority information of the first through third popup windows. Furthermore, the graphic information may include at least a color, a shape, a size, or a 3-dimensional depth value. The controller may control the location at which the first through third popup windows are displayed on the display unit.

The controller 180 may display an icon related to priority information on the first through third popup windows 252-254. The priority information of the first through third popup windows may be contained in information received from the user when the first through third popup windows are each displayed on the display unit 151.

Furthermore, though not shown in the drawings, the controller 180 may group the first through third popup windows 252-254 into a plurality of groups based on the attribute information of each of the first through third screen data. The controller may then control the graphic information of the first through third popup windows to distinguish a popup window contained in one of the plurality of groups from a popup window contained in another one of the plurality of groups.

When the first popup window 252 is selected while the third screen data is displayed on the first popup window, the controller 180 may control the display unit 151 to display the first screen data linked to the first popup window. Accordingly, the user can conveniently view the first screen data of interest by the selection of the first popup window.

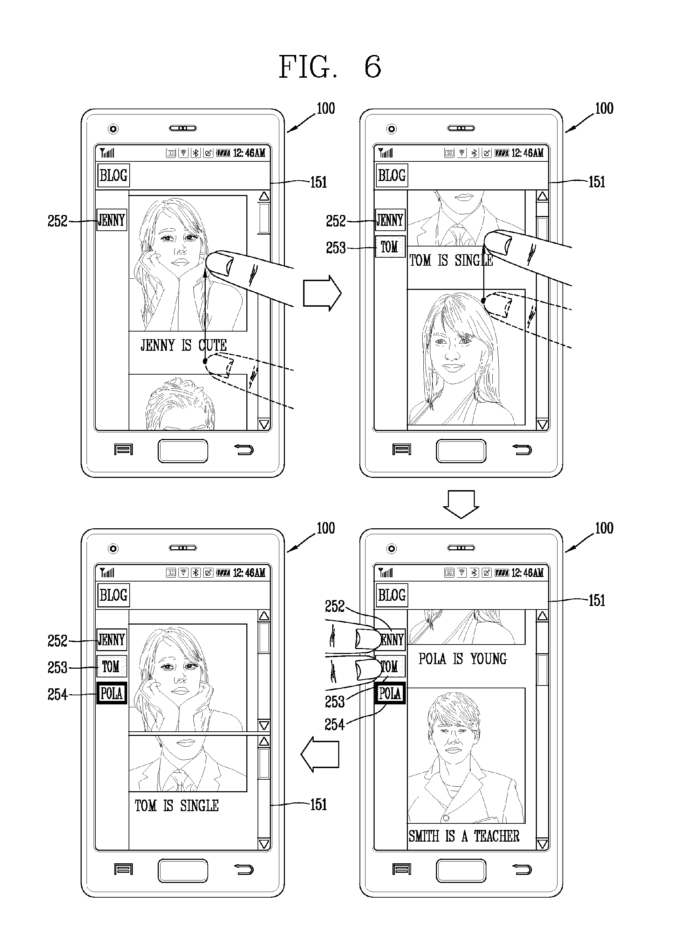

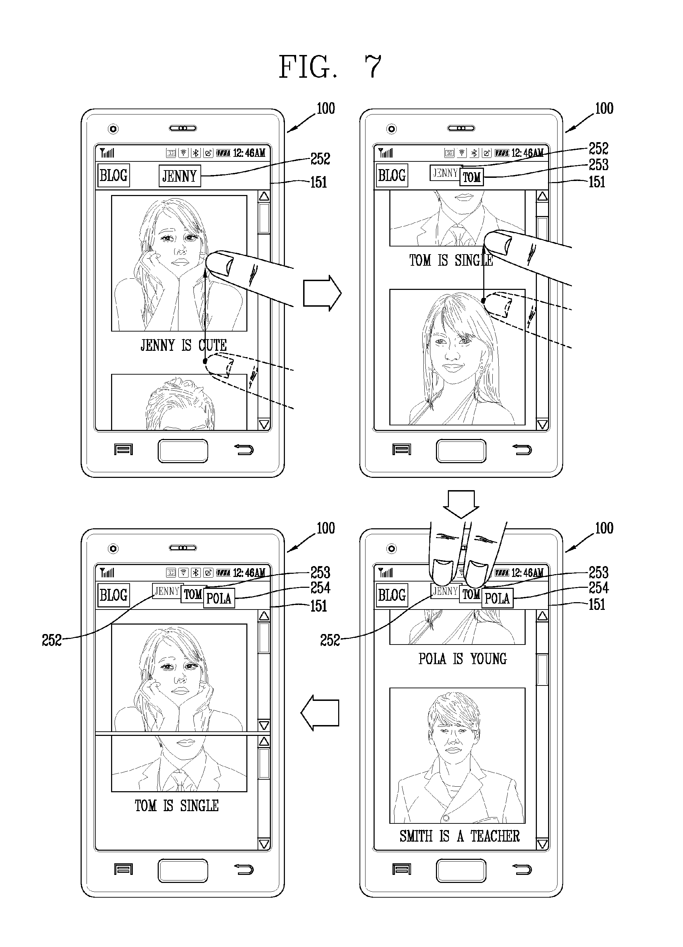

FIGS. 6 and 7 are conceptual views illustrating an operation of the mobile terminal 100 according to some embodiments of the present invention. The first through third popup windows 252-254 contain information related to the first through third screen data, respectively, and may be displayed on the display unit 151.

As illustrated in FIG. 6, the first through third popup windows 252-254 may be arranged in a vertical direction and in a different region relative to a region in which screen data is displayed. Furthermore, the first through third popup windows may be displayed in different colors from one another based on the attribute information of the first through third screen data.

As illustrated in FIG. 7, the first through third popup windows 252-254 may be arranged in a horizontal direction and in a different region relative to a region in which screen data is displayed. Furthermore, the first through third popup windows may be displayed in different sizes such that at least part the first through third popup windows is overlapped with one another based on the attribute information of each of the first through third screen data.

As illustrated in FIGS. 6 and 7, when the first popup window 252 and second popup window 253 are selected while the third screen data is displayed, the controller 180 may control the display unit 151 to display the first and the second screen data linked to the first and second popup windows, respectively, on a plurality of screen regions. Accordingly, by selecting a plurality of popup windows, the user can view a plurality of screen data of interest at the same time.

A bar for dividing first and second screen regions may be selected based on a touch input to the display unit 151. For example, when the user drags the bar towards the second screen region, the bar is moved towards the second screen region. Accordingly, the size of the first screen region is enlarged, and the size of the second screen region is reduced. As a result, an amount of content contained in the first screen data displayed on the first screen region can be increased, and an amount of content contained in the second screen data displayed on the second screen region can be decreased.

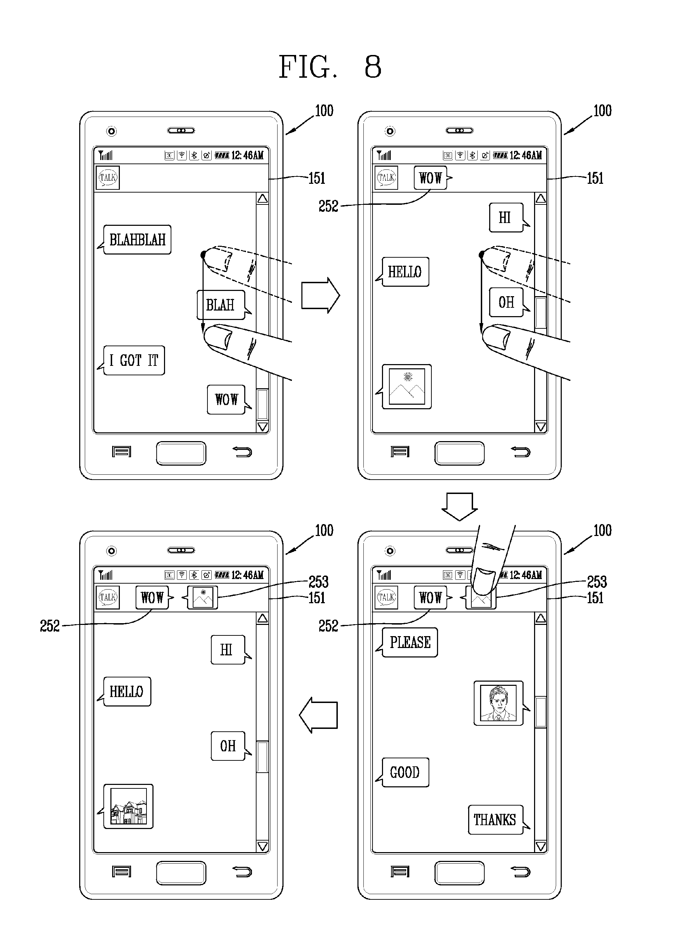

FIG. 8 is a conceptual view illustrating an operation of the mobile terminal 100 according to some embodiments of the present invention. In FIG. 8, the display unit 151 may display first screen data containing an outbound and inbound text message history. When a flick gesture is sensed in a second direction (e.g., from top to bottom) and the page is scrolled, the controller 180 may control the display unit to change the first screen data to the second screen data.

The controller 180 may further control the display unit 151 to display a first popup window 252 containing information related to the first screen data together with the second screen data. Content displayed at the lowest end among the contents contained in the first screen data (e.g., information corresponding to a specific word or information corresponding to a specific portion of the image) may be displayed on the first popup window.

Also, information displayed on the first popup window 252 may be edited when a flick gesture is sensed in a first direction (e.g., from bottom to top) that is opposite to the second direction. When a flick gesture is sensed again in the second direction and the page is scrolled, the controller 180 may control the display unit 151 to change the second screen data to the third screen data. Furthermore, the controller may control the display unit to display the second popup window 253 containing information related to the second screen data together with the first popup window 252 and third screen data. Information corresponding to content displayed at the bottom of the second screen data may be displayed on the second popup window.

When the second popup window 253 is selected while the third screen data is displayed on the second popup window, the controller 180 may control the display unit to display the second screen data linked to the second popup window. As such, the user can conveniently access the second screen data of interest by selecting the second popup window.

Though not shown in the drawings, when a flick gesture is sensed in a first direction while the first and second popup windows 252 and 253 are displayed on the display unit 151, the controller 180 may control the display unit to no longer display the first and second popup windows. The controller may then control the display unit to display the first and second popup windows again on the display unit in a sequence that is opposite to the sequence in which the first and second popup windows were previously displayed on the display unit.

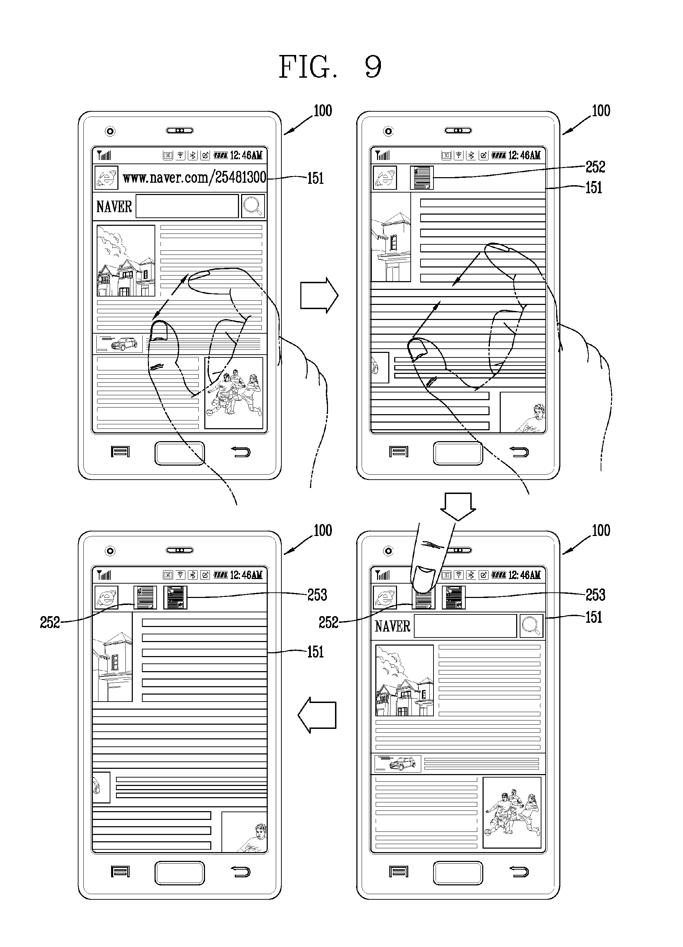

FIG. 9 is a conceptual view illustrating an operation performed by the mobile terminal 100 according to some embodiments of the present invention. The display unit 151 may display first screen data containing a web page. When a pinch-in gesture to the page is sensed, the controller 180 may control the display unit to change the first screen data to the second screen data by reducing a size of the web page contained in the first screen data. At least a part of the first and second screen data may overlap with each other.

Furthermore, the controller 180 may control the display unit 151 to display the first popup window 252 together with the second screen data on the display unit 151. Information corresponding to a captured image of the second screen data may be displayed on the first popup window. Though not shown in the drawing, an icon indicating that the web page has been enlarged may be displayed on the first popup window.

When a pinch-out gesture is sensed, the controller 180 may control the display unit 151 to change the second screen data to the third screen data by enlarging a size of the web page contained in the second screen data. Furthermore, the controller may further control the display unit to display the second popup window 253, on which information corresponding to a captured image of the third screen data is displayed together with the first popup window 252 and third screen data.

When the first popup window 252 is selected while the third screen data is displayed on the first popup window, the controller 180 may control the display unit 151 to display second screen data related to the first popup window 252. Accordingly, the user can intuitively and conveniently recognize screen data related to the popup windows through information displayed on the popup window.

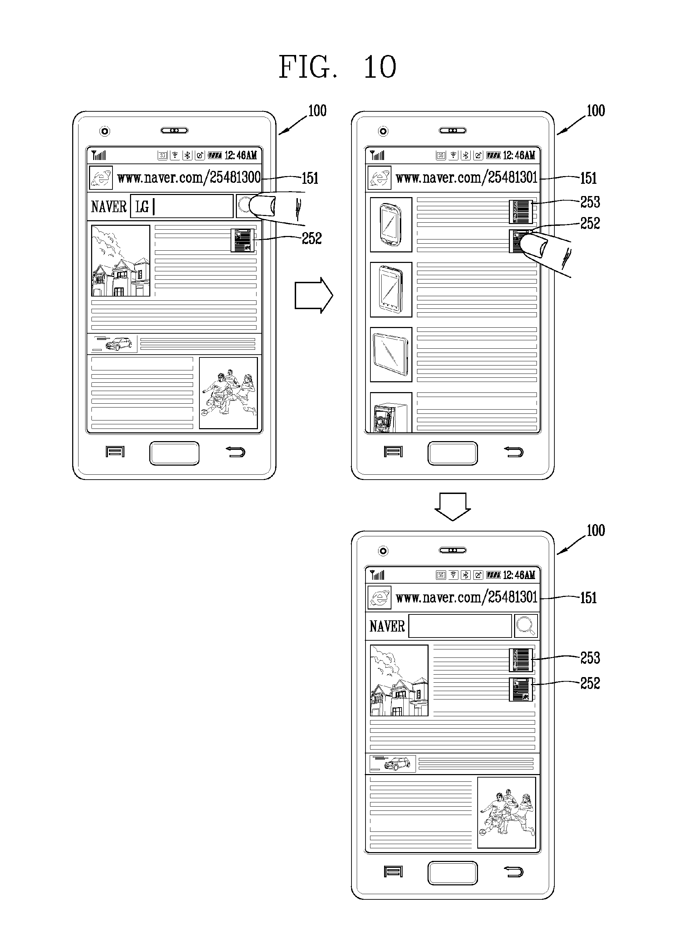

FIG. 10 is a conceptual view illustrating an operation of the mobile terminal 10 according to some embodiments of the present invention. The display unit 151 may display the first screen data of the first page containing a web page together with the first popup window 252 containing information related to the first screen data. Information corresponding to a captured image of the first screen data may be displayed on the first popup window. The first popup window may be displayed as overlapped with the first screen data.

When a touch input to the first page is sensed (e.g., when a touch input to an object linked to the second page is sensed), the controller 180 may control the display unit 151 to change the display of the first screen data to the second screen data. Furthermore, the controller may further control the display unit to display the second popup window 253 together with the first popup window 252 and second screen data. The first and the second popup windows may be displayed as overlapped with and hiding a part of the second screen data. The controller may be further configured to control the displayed location of the first and second popup windows based on a point in time when the first and the second screen data are each displayed on the display unit.

Though not shown in the drawings, when screen data displayed on the display unit 151 is changed according to the selection of a folder and upper and lower folders are displayed together, information related to the screen data (e.g., a popup window containing the attribute information of the selected folder) may be displayed on the display unit.

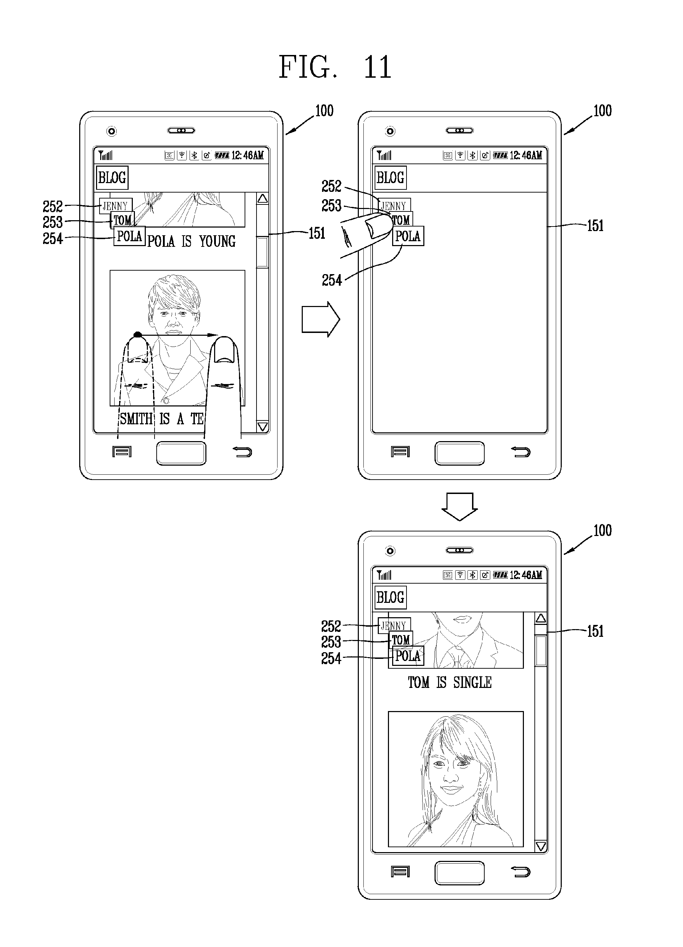

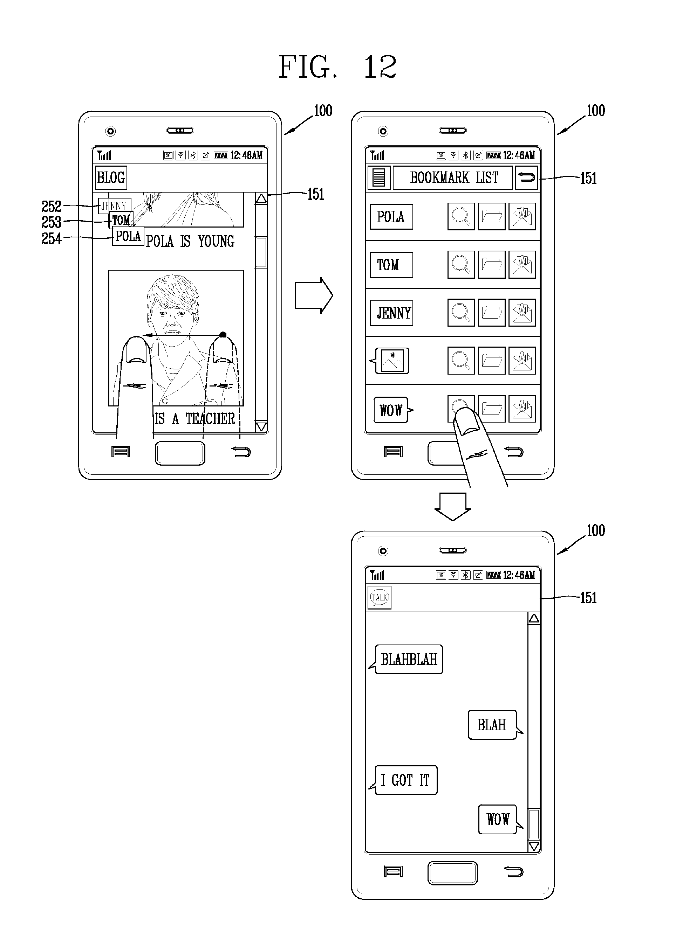

FIGS. 11 and 12 are conceptual views illustrating an operation performed by the mobile terminal 100 according to some embodiments of the present invention. The display unit 151 may display the first through third popup windows 252-254 together with the third screen data linked to the third popup window.

Referring to FIG. 11, when a flick gesture is sensed in a third direction (e.g., from left to right), the controller 180 may cause the third screen data to no longer be displayed on the display unit 151. For example, the controller may switch a first page displayed on the display unit to a second page. The switched second page may still include the first through third popup windows 252-254.

Referring to FIG. 12, when a flick gesture is sensed in a fourth direction (e.g., from right to left), the controller 180 may control the display unit 151 to no longer display the third screen data and the first through third popup window 252-254. For example, the controller may switch a first page displayed on the display unit to a second page. The switched second page may include a list of the no longer displayed first through third popup windows.

The list of popup windows may include at least an icon corresponding to displaying screen data linked to a popup window (hereinafter referred to as "screen data display icon"), an icon corresponding to storing screen data, or an icon corresponding to transmitting screen data. The function corresponding to the icon may be implemented based on a touch input to the list of popup windows.

When a touch input to the screen data display icon is sensed, the controller 180 may control the display unit 151 to display screen data linked to the corresponding popup window and control the display unit to no longer display the list of popup windows. Though not shown in the drawings, the controller may further control the display unit to display the list of popup windows and the screen data linked to the list of popup windows on a plurality of screen regions.

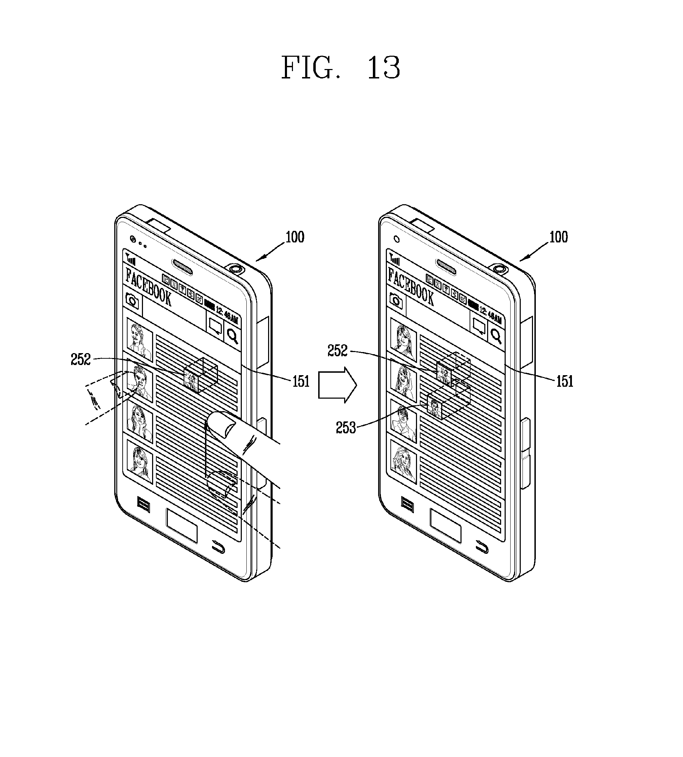

FIGS. 13 through 15 are conceptual views illustrating an operation performed by the mobile terminal 100 according to some embodiments of the present invention.

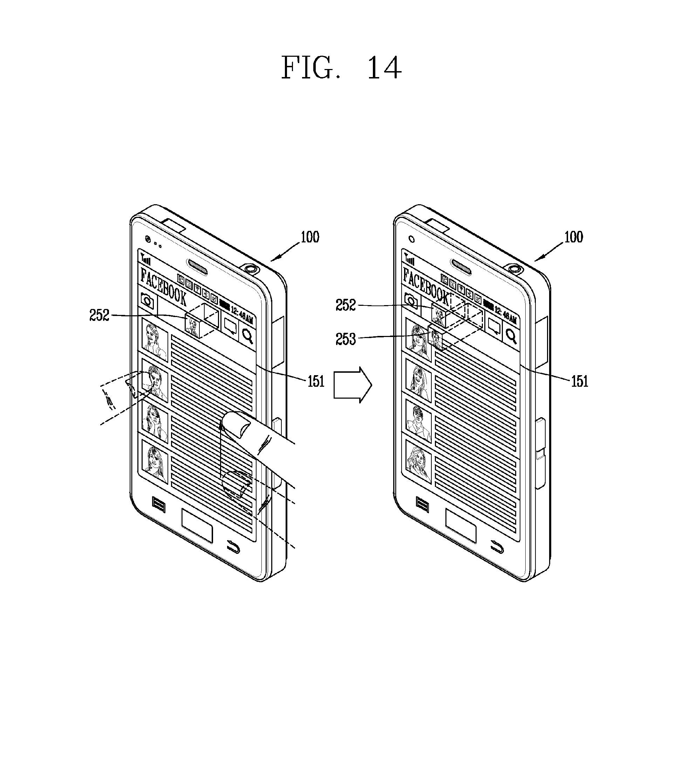

In FIGS. 13 and 14, the display unit 151 may display the second screen data containing contents of social network services (SNS). Furthermore, the display unit may further display the first popup window 252 containing information related to the first screen data together with the second screen data.

The user may select information to be displayed on the second popup window 253 that contains information related to the second screen data. When a flick gesture is sensed in a first direction (e.g., from bottom to top) and the page is scrolled after selecting any one of the contents contained in the second screen data, the controller 180 may control the display unit 151 to change the second screen data to the third screen data.

The controller 180 may then control the display unit to display the second popup window 253 containing information related to the second screen data together with the third screen data. Information selected by the user may be displayed on the second popup window. As illustrated in FIG. 13, the first and second popup windows 252 and 253 may be displayed as overlapped with a region in which the screen data is displayed.

As illustrated in FIG. 14, the first and second popup window 252 and 253 may be displayed in a different region relative to a region in which the screen data is displayed.

The first and second popup windows 252 and 253 may have different 3-dimensional depth values. The controller 180 may control the graphic information (e.g., 3-dimensional depth values) of the first and second popup windows based on the attribute information of each of the first and second screen data. The attribute information may include at least a point in time at which the first and second screen data are displayed on the display unit 151, a time period for which the first and second screen data are displayed on the display unit 151, or priority information of the first and second popup windows.

The second popup window 253 may have a 3-dimensional depth value that is greater than the 3-dimensional depth value of the first popup window 252 based on time information related to when each of the first and second screen data are displayed on the display unit 151. Accordingly, the second popup window 253 may be displayed as further protruded out from the display unit.

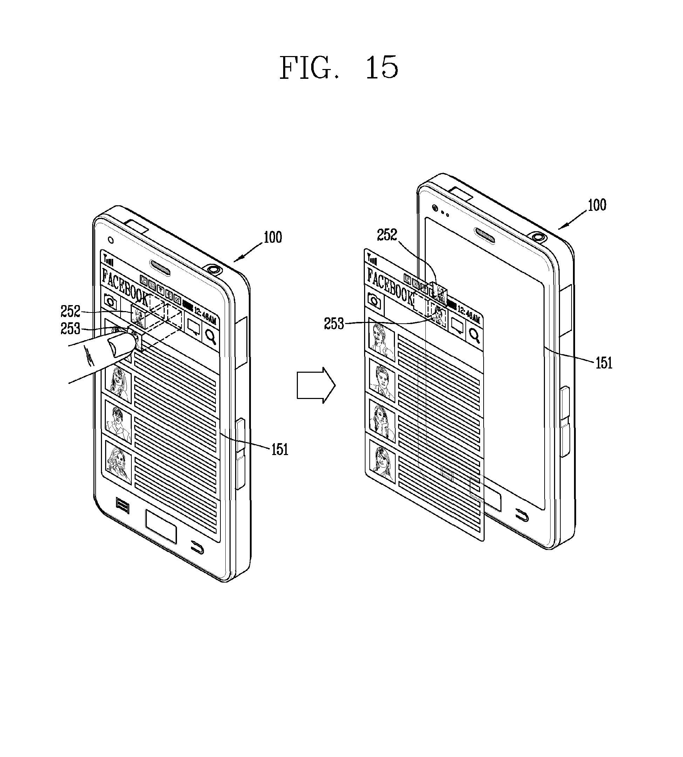

In FIG. 15, when the second popup window 253 is selected while the first popup window 252, second popup window, and third screen data are displayed together on the display unit 151, the third screen data may be changed to the second screen data that is linked to the second popup window. The second screen data may then be displayed on the display unit as having a 3-dimensional depth value.

The second screen data linked to the second popup window 253 may have the same 3-dimensional depth value as the 3-dimensional depth value of the second popup window.

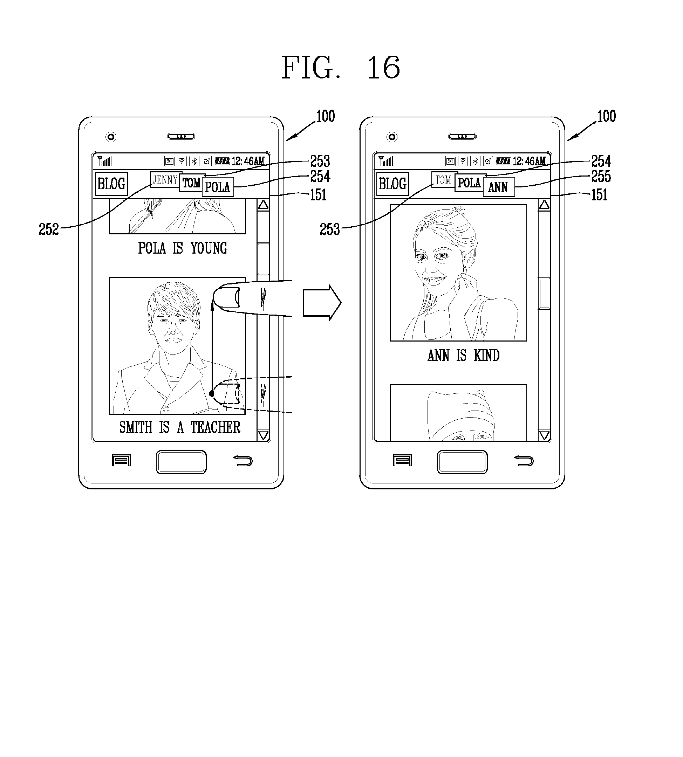

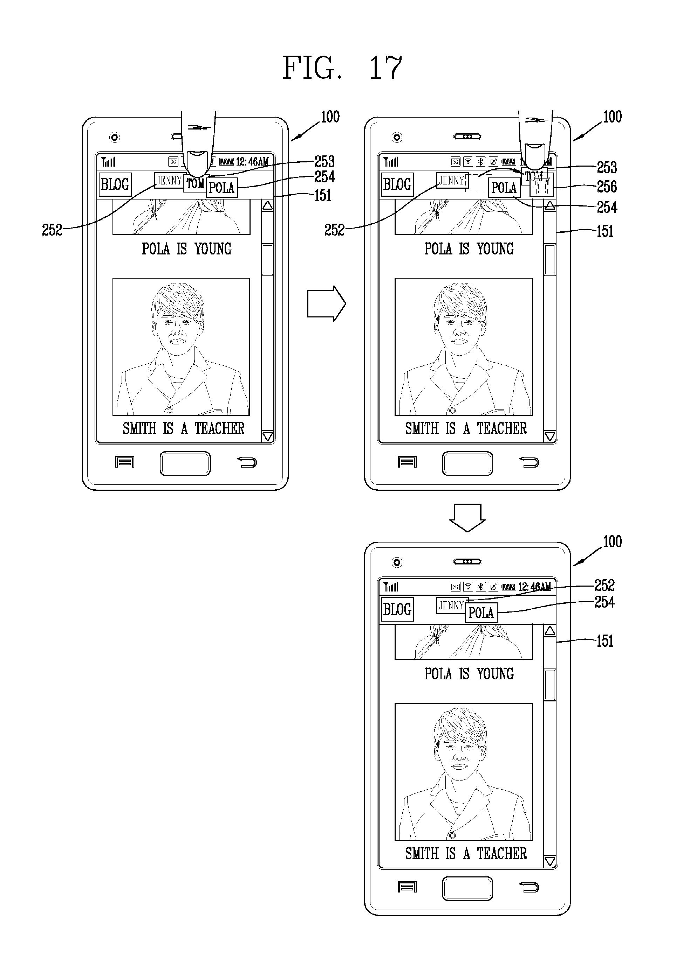

FIGS. 16 and 17 are conceptual views illustrating an operation of the mobile terminal 100 according to some embodiments of the present invention. The display unit 151 may display the first through third popup windows 252-254 together with the third screen data that is linked to the third popup window.

In FIG. 16, when a flick gesture is sensed in a second direction (e.g., from bottom to top) and the page is scrolled, the controller 180 may control the display unit 151 to change the third screen data to the fourth screen data. The controller 180 may also control the display unit 151 to no longer display the first popup window 252 while displaying a fourth popup window 255 containing information related to the fourth screen data on the display unit. The controller may also control the display unit to no longer display at least one of the popup windows when a number of popup windows displayed on the display unit is greater than a predetermined number.

The controller 180 may set the graphic information of the first through third popup windows 252-254 based on the attribute information of each of the first through third screen data. The attribute information may include at least a point in time at which the first through third screen data are displayed on the display unit 151, a time period for which the first through third screen data are displayed on the display unit, or priority information of each of the first through third popup windows.

In FIG. 17, when at least one of the first through third popup windows 252-254 displayed on the display unit 151 is selected (e.g., when the second popup window 253 is selected), the controller 180 may control the display unit to display a hiding icon 256 related to the hiding of the second popup window from the display unit. A control command for hiding the second popup window may be sensed when the second popup window is dragged in the direction of the hiding icon. Accordingly, the controller may control the display unit to no longer display the second popup window. Though not shown in the drawings, the controller 180 may change the graphic information of each of the popup windows based on the attribute information of each of the popup windows, thereby allowing the user to easily select a popup window to hide.

According to an embodiment of present disclosure, the method(s) described herein may be implemented as code(s) in computer-readable medium. Examples of such computer-readable medium may include ROM, RAM, CD-ROM, magnetic tape, floppy disk, and optical data storage device, other similar computer-readable medium, and devices implementing a carrier wave (e.g., transmission via the Internet).

Although various methods have been described in conjunction with regard to a mobile terminal it will be understood by one of ordinary skill in the relevant art that embodiments of the present invention are not limited to a mobile terminal and may alternatively be implemented using other types of electronic devices.

The foregoing embodiments and advantages are merely exemplary and are not to be construed as limiting the present invention. The present teaching may be readily applied to other types of apparatuses and processes. The description of the present invention is intended to be illustrative and not to limit the scope of the claims. Many alternatives, modifications and variations will be apparent to those skilled in the relevant art.

## Claims

1. A mobile terminal(100) comprising:
a display unit(151) configured to display at least first screen data and second screen data; and
a controller(180) configured to control the display unit(151) to display at least a first popup window containing information related to the displayed first screen data or a second popup window containing information related to the displayed second screen data when the displayed first screen data are changed to the displayed second screen data in response to a touch input.

2. The mobile terminal(100) of claim 1, wherein the controller(180) is further configured to:
detect a scrolling or flick input; and
control the display unit to:
display the first and second screen data on different pages, and
change the display of the first screen data to the second screen data in response to deleting the scrolling or flick input.

3. The mobile terminal(100) of claim 2, wherein the controller(180) is further configured to control the display unit(151) to display information related to a predetermined condition on at least the first or second popup window.

4. The mobile terminal(100) of claim 3, wherein the controller(180) is further configured to control the display unit(151) to display information on the at least first or second popup window that correspond to at least text contained in at least the first or second screen data, a portion of an image contained in the at least first or second screen data, a region selected from the at least first or second screen data by the user or an image captured from the displayed at least first or second screen data.

5. The mobile terminal(100) of claim 4, wherein the controller(180) is further configured to control the display unit(151) to:
display the at least first or second popup window in a region that is different from a region in which the at least first or second screen data is displayed; or
display the at least first or second popup window such that it overlaps with the region in which the at least first or second screen data is displayed.

6. The mobile terminal(100) of claim 5, wherein the controller(180) is further configured to control the display unit(151) to:
display the at least first or second popup window in a transparent or semi-transparent manner such that the at least first or second screen data corresponding to an overlapped region is viewable; or
display the at least first or second popup window in a non-transparent manner such that the at least first or second screen data corresponding to the overlapped region is not viewable.

7. The mobile terminal(100) of claim 2, wherein the controller(180) is further configured to:
detect selection of the displayed at least first or second popup window; and
control the display unit(151) to display the at least first or second screen data when the at least first or second popup window is selected.

8. The mobile terminal(100) of claim 7, wherein the controller(180) is further configured to:
detect selection of two or more popup windows displayed in a plurality of screen regions; and
control the display unit(151) to display screen data linked to at least one of the selected two or more popup windows.

9. The mobile terminal(100) of claim 2, wherein the controller(180) is further configured to set graphic information of the at least first or second popup window based on attribute information of the at least first or second screen data that is linked to the displayed at least first or second popup window.

10. The mobile terminal(100) of claim 9, wherein the graphic information comprises a 3-dimensional depth value.

11. The mobile terminal(100) of claim 10, wherein the controller(180) is further configured to:
control the display unit(151) to display the at least first or second popup window based on the 3-dimensional depth value; and
detect selection of the displayed at least first or second popup window; and
control the display unit(151) to display the at least first or second screen data linked to the selected at least first or second popup window with a same 3-dimentional depth value as the 3-dimentional depth value of the displayed at least first or second popup window.

12. The mobile terminal(100) of claim 2, wherein the controller(180) is further configured to control the display unit(151) to display the at least first or second popup window based on a scrolling speed of the scrolling input, a flick input speed of the flick input or a time at which the at least first or second screen data is displayed.

13. The mobile terminal(100) of claim 2, wherein the controller(180) is further configured to:
detect switching of a first page displayed on the display unit(151) to a second page displayed on the display unit(151); and
control the display unit(151) to no longer display at least one of the at least first or second popup window and its corresponding screen data when the switching is detected.

14. The mobile terminal(100) of claim 13, wherein the controller(180) is further configured to control the display unit(151) to display a list of popup windows no longer displayed on the display unit(151) when the switching is detected.

15. A method of controlling a mobile terminal(100), the method comprising:
displaying first screen data on a display unit(S110);
changing the first screen data to second screen data based on a touch input(S120); and
displaying at least a first popup window containing information related to the first screen data or a second popup window containing information related to the second screen data on the display unit(S130).
